# FASCICULE DE BREVET EUROPEEN

(11) **EP 1 400 090 B1**
(45) Date de publication et mention de la délivrance du brevet: **02.05.2007**
(21) Numéro de dépôt: 02755084.7
(22) Date de dépôt: 24.06.2002
(51) Int. Cl.: H04L 29/06

(54) **PROCEDE ET DISPOSITIF DE SECURISATION DES COMMUNICATIONS DANS UN RESEAU INFORMATIQUE**
VORRICHTUNG UND VERFAHREN ZUR BEREITSTELLUNG GESICHERTER KOMMUNIKATION IN EINEM COMPUTERNETZWERK
METHOD AND DEVICE FOR SECURING COMMUNICATIONS IN A COMPUTER NETWORK

(30) Priorité: 27.06.2001 FR 0108451
(43) Date de publication de la demande: 24.03.2004
(73) Titulaire: Amadeus S.A.S., 06410 Biot (FR)
(72) Inventeur: FELIX, Fabien, Off. Medit. De Brevets D'Invention, F-06000 Nice (FR)
(74) Mandataire: Hautier, Jean-Louis
(86) Numéro de dépôt international: PCT/FR2002/002171
(87) Numéro de publication internationale: WO 2003/003691

(56) Documents cités:
- WO-A-01/45049
- FR-A- 2 799 077

## Description

La présente invention concerne un procédé ainsi qu'un dispositif de sécurisation des communications dans un système informatique. Un tel système est connu par exemple par WO 03/003691 A1.

Un tel système comprend généralement une partie serveur dotée au moins d'un serveur central et une partie client pourvue au moins d'un poste client généralement distant de la partie serveur et reliée à celle-ci par un réseau de communications.

Des clients, tels des employés distants du système informatique central, peuvent accéder au système par le biais des postes clients. Ils s'identifient de façon générale par un nom de session qui leur est associé.

L'invention trouvera particulièrement son application pour la sécurisation de transmissions informatiques utilisant le protocole de communication TN 3270.

Ce protocole est utilisé par une partie importante des ordinateurs correspondant au système appelé SNA (Systems Network Architecture, architecture réseau de systèmes). Le protocole SNA définit comment le programme du serveur central échange des informations avec le dispositif client. Le protocole SNA décrit en outre les messages qui sont utilisés pour les formats d'écran (telles que les commandes pour régler la position du pointeur ou la couleur d'écran) définis sous forme d'un flux de données au format 3270.

La machine client qui reçoit le flux de données 3270 l'interprète et génère le bon format d'écran selon un jeu de règles prédéfinies.

Le protocole de communication SNA était généralement disponible sur des protocoles de niveau spécifiques (tel que le X25) mais non pas sur des protocoles de plus haut niveau tel que le TCP/IP (Transmission Control Protocol / Internet Protocol) qui permet à beaucoup de systèmes sur des plates-formes non homogènes de communiquer entre eux.

Dans le but d'effectuer des transferts de flux de données 3270 sur un réseau TCP/IP, la communauté Internet a défini un protocole dénommé TN 3270E qui est défini dans les documentations suivantes: Request For Comment (RFC) 1576, 1647 et 2355.

Les initiales TN du protocole signifie Tel Net, le protocole Tel Net étant particulièrement défini dans les documents suivants : Request For Comment (RFC) 854, 860 et 862.

L'extension numérique 3270 signifie le format du flux de données et l'adjonction E signifie Etendue tel que définie dans le document Request For Comment (RFC) 1647.

Pour la description qui suit, on entend par TN 3270 aussi bien la notion de protocole TN 3270 que son extension TN 3270E compte tenu que le principe général de réalisation est exactement le même pour ces deux protocoles.

Dans l'état actuel de la technique, seule une sécurisation limitée et peu fiable est prévue dans les communications informatiques utilisant l'architecture telle que définie précédemment avec une combinaison du protocole TN 3270 au travers d'un réseau informatique public du type Internet.

Actuellement, on attribue uniquement un nom de session à un client, ce nom de session étant associé à des propriétés stockées dans une table de configuration du serveur mais qui présente divers inconvénients.

En premier lieu, le nom de session du client est transmis en clair au travers du réseau. Il est donc possible de le pirater.

Qui plus est, les propriétés associées au nom de session peuvent comprendre l'adresse IP du poste client (adresse de localisation associée à un poste informatique dans un réseau Internet selon le protocole Internet). Par conséquent, si le client vient à changer d'adresse IP (par exemple s'il se connecte à un autre point du réseau), le serveur ne pourra plus le reconnaître et l'autoriser à accéder au système informatique.

En résumé, on constate que les moyens d'autorisation actuellement mis en oeuvre dans le cadre de ces systèmes donnaient satisfaction dans un réseau privé mais qu'ils ne sont pas compatibles avec une utilisation dans un réseau public du type Internet. En effet, ce type d'application nécessite de pouvoir modifier dynamiquement certains paramètres de connexion et notamment l'adresse IP du client.

La présente invention permet de remédier aux inconvénients des techniques connues jusqu'à présent et présente, pour ce faire, un procédé et un dispositif particulièrement avantageux.

Un des premiers buts de l'invention est d'utiliser un certificat numérique complet permettant une authentification efficace de chaque client.

Cette création de certificat numérique s'effectue de façon particulièrement sécurisée au niveau du poste client.

Qui plus est, on peut associer au certificat numérique une transmission sécurisée des données depuis le poste client jusqu'au serveur.

Ces avantages quant à la sécurisation tant de l'autorisation d'accès des clients que des transmissions au travers du réseau de communication sont produits tout en réalisant une implantation totalement transparente pour les composants préexistants du système informatique. En particulier, la présente invention peut être installée sous forme d'extensions sur des systèmes existants sans pour autant nécessiter une modification logicielle ou matérielle de ceux-ci pouvant générer de nombreux inconvénients pratiques.

Ce faisant, la présente invention élargit les applications en particulier du protocole TN 3270 puisqu'elle permet de recourir au réseau Internet classique plutôt que de se limiter à son utilisation dans des réseaux privés spécifiques.

D'autres buts et avantages apparaîtront au cours de la description qui suit qui présente en détail un mode de réalisation préféré de l'invention qui n'en est cependant pas limitatif.

La présente invention concerne un procédé de sécurisation des communications dans un système informatique comprenant une partie serveur dotée d'au moins un serveur et une partie client pourvue d'au moins un poste client par lequel un client peut accéder au système en spécifiant un nom de session caractérisé par les étapes suivantes
- création d'un dispositif de passerelle dans la partie serveur, en communication avec le serveur,
- création, au voisinage physique de chaque poste client, d'un dispositif de proximité en communication avec ledit poste client et le dispositif de passerelle,
- communication entre le serveur et le poste client par l'intermédiaire des dispositifs d'interface de proximité et de passerelle,
- cryptage de tout ou partie de la transmission entre le dispositif de passerelle et le dispositif d'interface de proximité.

Ce procédé pourra se présenter suivant les variantes introduites ci-après :
- on mémorise dans le poste client et le dispositif d'interface de proximité un certificat d'autorisation associé à un unique nom de session de client,
- on présente le certificat au serveur depuis le dispositif d'interface de proximité, par l'intermédiaire du dispositif de passerelle, pour vérification de l'autorisation de connexion du client,
- le certificat inclut le nom de session du client,
- on mémorise le certificat dans le poste client et le dispositif d'interface de proximité par :
   - fourniture à un installateur d'un identifiant de certificat et d'un nom de session fourni par le serveur lors de la création de la session sur le poste client par un organisme de certification,
   - installation du certificat sur le poste client par téléchargement de l'organisme de certification sur requête de l'installateur conditionnée à la présentation de l'identifiant de certificat et en y intégrant le nom de session du client par saisie de l'installateur.
- le cryptage des données entre le dispositif de passerelle et le dispositif d'interface de proximité s'effectue par utilisation de paires de clés publiques et privées,
- on utilise un dispositif d'interface de proximité sous forme d'extension logicielle implémentée dans le poste client,
- le client saisit son nom de session au niveau du poste client lors de la configuration initiale de l'application du poste client,
- on vérifie l'identité du nom de session saisi et de celui inclus dans le certificat
pour vérifier l'autorisation du client,
- on utilise le protocole de communication Telnet 3270,
- les communications dans le système s'effectuent par un réseau au standard TCP/IP.

L'invention concerne également un système informatique à communications sécurisées comprenant une partie serveur dotée d'au moins un serveur et une partie client pourvue d'au moins un poste client par lequel un client peut accéder au système en saisissant un nom de session, apte à mettre en oeuvre le procédé selon l'invention, caractérisé par le fait
qu'il comporte :
- un dispositif de passerelle dans la partie serveur, en communication avec le serveur,
- un dispositif d'interface de proximité au voisinage physique de chaque poste client, en communication avec ledit poste client et le dispositif de passerelle,
- des moyens de cryptage pour les transmissions entre le dispositif de passerelle et le dispositif d'interface de proximité.

Selon une variante, les messages de transmission entre le dispositif de passerelle et le dispositif d'interface de proximité comprennent un entête intégrant des données de sécurisation.

Les dessins ci-joints sont donnés à titre d'exemples et ne sont pas limitatifs de l'invention. Ils représentent seulement un mode de réalisation de l'invention et permettront de la comprendre aisément.
La figure 1 est une illustration générale de l'architecture d'un système informatique utilisant un réseau de communication entre des postes clients et un serveur central.
La figure 2 est une présentation schématique de l'invention.
La figure 3 montre un format de message classique utilisant le protocole TN 3270 au travers d'un réseau TCP/IP.
La figure 4 illustre un format de message caractéristique de l'invention.
La figure 5 illustre plus précisément les interactions entre les éléments constitutifs du système utilisant l'invention.

La description qui suit présente un exemple préféré de l'invention dans le cadre d'exploitation de communications selon le protocole TN 3270 dans un réseau de communications TCP/IP. Ce mode de réalisation préféré n'est cependant pas limitatif des applications de l'invention.

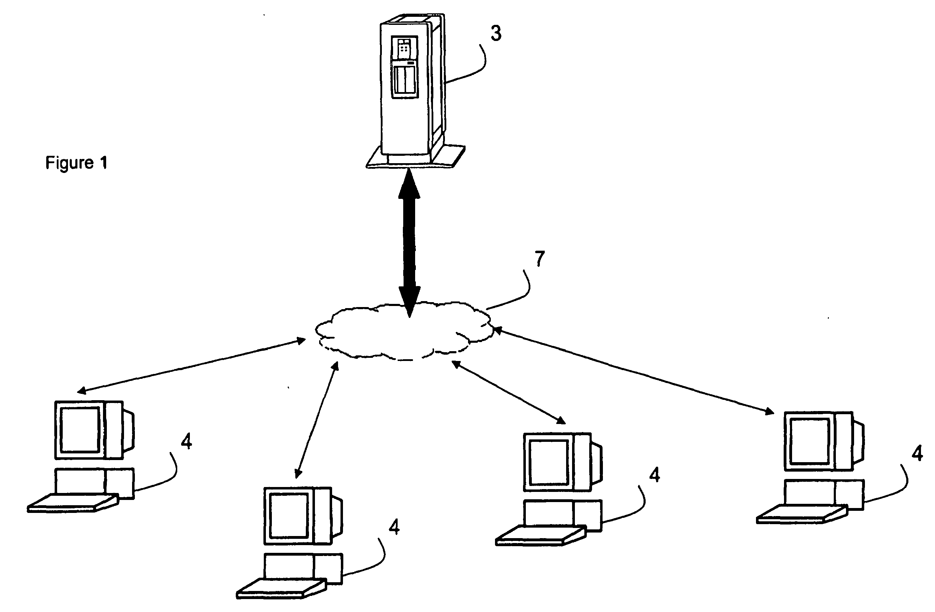

La figure 1 donne une illustration de l'architecture d'un réseau au format TN 3270 tel que connu actuellement. Une telle architecture comprend une pluralité de postes clients 4 communiquant au travers d'un réseau 7 avec un serveur 3.

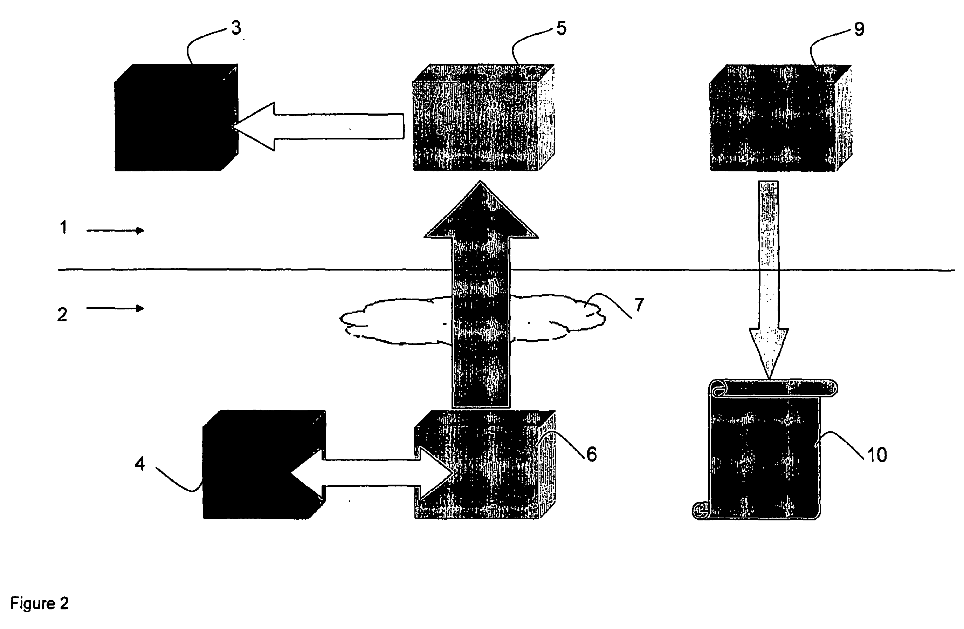

La figure 2 illustre un mode de réalisation de l'invention et ses composants caractéristiques.

On crée tout d'abord, dans la partie serveur 1, un dispositif de passerelle 5 préférentiellement sous forme d'une extension logicielle du serveur 3. Cette extension logicielle ne modifie cependant pas l'intégrité de la configuration du serveur 3.

Le dispositif de passerelle 5 agit comme un intermédiaire entre la pluralité de postes clients 4 et le serveur 3 lors de leurs communications au travers du réseau 7.

D'une part le dispositif de passerelle 5 gère plusieurs sessions simultanées TCP/IP avec les programmes supportés par les postes clients 4 et, d'autre part, plusieurs sessions simultanées avec le serveur 3.

Selon l'invention, on crée également un dispositif d'interface de proximité 6 positionné dans la partie client, au voisinage de chacun des postes clients 4. En particulier, on pourra implanter le dispositif d'interface de proximité 6 sous forme d'extension logicielle du poste client 4. Cette extension s'effectue tout en préservant l'intégrité logicielle du poste client 4.

Cela étant, lors d'une création complète d'architecture de réseau, il est possible de rendre spécifique le code source du logiciel client TN 3270 4 pour y intégrer les fonctionnalités du dispositif d'interface de proximité 6 afin de réaliser un seul programme unitaire.

Le dispositif d'interface de proximité 6 agit comme un intermédiaire entre les postes clients 4 et le dispositif de passerelle 5. En conséquence, la combinaison du dispositif de passerelle 5 et du dispositif d'interface de proximité 6 agit comme un véritable ensemble intermédiaire de communication au travers du réseau 7.

Cette combinaison permet de sécuriser les communications au travers du réseau 7 et, auparavant, de vérifier l'autorisation des clients.

On décrit ci-après plus précisément ces fonctionnalités.

Pour permettre l'identification sûre des clients, on a avantageusement recours au service d'un organisme de certification 9 tel que schématisé en figure 2.

De façon connue en soi, l'organisme 9 est constitué par un site Internet auquel on peut accéder pour télécharger et installer un certificat sur chaque poste client 4 utilisant l'invention. On accède au service de l'organisme 9 une seule fois pour chaque poste client 4, lors de l'installation de l'application logicielle du client.

L'objet essentiel du certificat créé grâce à l'organisme 9 est de bloquer un nom de session TN 3270 qui pourra être utilisé par le client. Un certificat numérique est une solution idéale pour stocker des informations d'identification car les systèmes de navigation sur Internet fournissent généralement des mécanismes qui permettent de protéger les certificats contre la copie depuis un ordinateur vers un autre.

La présente invention utilise d'autres fonctions des certificats et notamment les clés utilisées pour crypter et décrypter les données échangées entre le dispositif de passerelle 5 et le dispositif d'interface de proximité 6.

Par ailleurs, le certificat présente une durée de vie prédéfinie qui le rend valable pendant une période de temps donnée et qui peut être révoqué à tout instant de façon centralisée.

Le certificat numérique 10 créé selon l'invention est en fait une donnée de rattachement à un message électronique utilisé pour des besoins de sécurité. De façon connue, les certificats numériques sont utilisés pour vérifier que la personne envoyant des messages est bien celle qu'elle indique être et pour fournir à la personne qui reçoit le message les moyens d'envoyer une réponse codée.

Une personne désireuse d'envoyer des messages en crypté demande à un organisme de certification l'attribution d'un certificat numérique ou alors implémente elle même le service en se déclarant elle même authorité de certificat.

L'organisme de certification 9 est une tierce partie de confiance, telle qu'une entreprise professionnelle dans ce genre de services, qui délivre des certificats numériques pour créer des signatures numériques et des paires de clés publiques et privées. Le rôle de l'organisme de certification 9, dans le procédé selon l'invention, est de garantir que le client présentant un certificat unique est de façon réelle celui qu'il indique être. De façon générale, cela signifie que l'organisme de certification 9 a des accords avec des institutions financières telle qu'une entreprise de crédit qui lui procure des informations pour confirmer l'identité de chaque individu.

L'organisme de certification 9 délivre un certificat numérique crypté contenant diverses informations d'identification du client ainsi qu'une clé publique. L'organisme de certification 9 établit sa propre clé publique accessible par tout moyen de communication et notamment par le biais de son site Internet.

La personne recevant un message crypté récupère et utilise la clé publique de l'organisme de certification 9 pour décoder le certificat numérique attaché au message crypté. Il vérifie ainsi que le certificat a bien été délivré par l'organisme de certification 9 et obtient la clé publique de l'envoyeur du message ainsi que des informations d'identification contenues dans le certificat. Avec ces informations, la personne recevant le message peut alors envoyer une réponse cryptée.

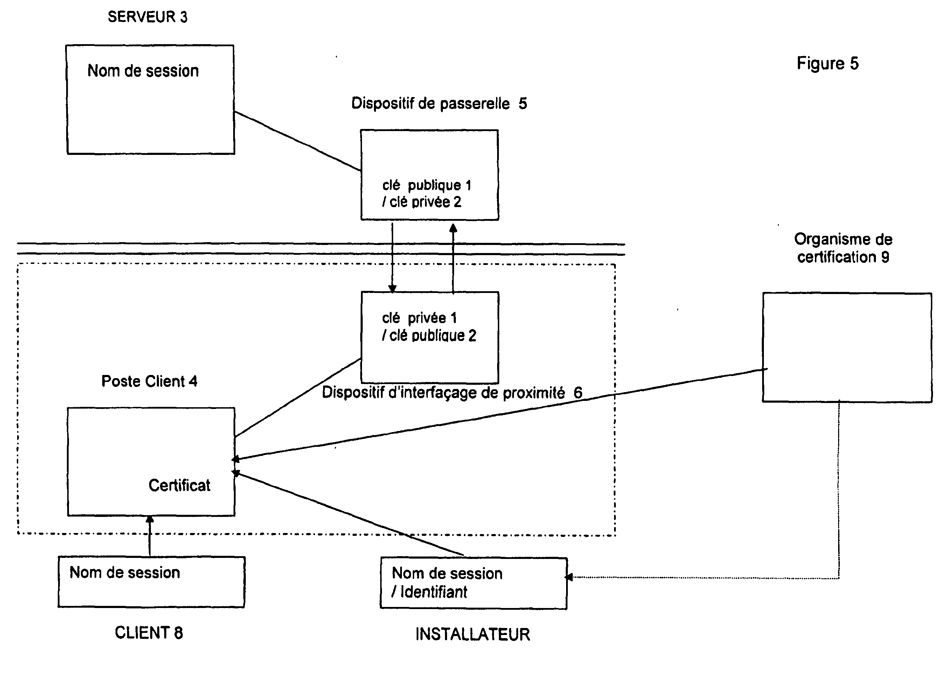

La présente invention utilise préférentiellement ce système de clés publiques pour le cryptage et le décryptage des transmissions. Dans ce cadre, deux clés sont nécessaires pour permettre aux parties d'échanger des informations de façon sécurisée : une clé publique et une clé privée. Un exemple de réalisation est présenté en figure 5 pour l'utilisation de telles paires de clés publiques - privées.

L'une des clés de la paire est utilisée pour crypter le message (la clé publique) alors que l'autre est utilisée pour le décrypter (la clé privée). Quand le dispositif d'interface de proximité 6 veut adresser un message crypté au dispositif de passerelle 5, il le crypte en utilisant la clé publique et, le dispositif de passerelle 5, étant le seul possesseur de la clé privée correspondante de la paire, est l'unique dispositif pouvant le décrypter.

Bien que les clés publiques et privées d'une paire soient mathématiquement corrélées, il est, dans la pratique, impossible de déduire l'une de l'autre. Par conséquent, le caractère public d'une des clés ne nuit pas à la sécurisation du cryptage.

On pourra notamment utiliser pour la réalisation du certificat 10 selon l'invention le format largement répandu pour les certificats numériques selon le standard ITU-T X.509.

Ce format comprend les champs suivants : version, numéro de série, identifiant d'algorithmes de signature, nom du fournisseur du certificat, période de validité, nom d'utilisateur, information quant à la clé publique de l'utilisateur, identifiant unique du fournisseur, identifiant unique de l'utilisateur, extensions, signature sur les champs précédents. Le certificat est signé par le fournisseur pour authentifier la relation existant entre le nom de l'utilisateur et la clé publique d'utilisateur.

La présente invention utilise un champ de texte libre dans ce certificat. En effet, le champ « nom d'utilisateur » est utilisé pour stocker le nom de session du client qui peut être utilisé sur le poste client qui l'a téléchargé.

Dans un souci de sécurité, l'organisme de certification 9 marque le certificat 10 comme non exportable, à savoir qu'il ne peut être réinstallé sur un autre poste client une fois que l'étape d'installation a été effectuée.

L'organisme de certification 9, qui peut aussi être la société mettant en oeuvre l'invention, met en oeuvre un logiciel qui peut tourner sur un serveur informatique WEB ou sur un serveur spécifique. Il a la charge d'accéder à une table de correspondance qui va relier les noms de session TN 3270 avec un identifiant de certificat. A chaque fois qu'un nouveau nom de session de client est alloué sur le serveur 3 pour un nouveau client, une nouvelle entrée est ajoutée à la table de correspondance par les administrateurs du système. L'identifiant de certificat est un nombre aléatoire unique pour chaque nom de session.

On décrit ci-après les étapes d'installation du certificat sur un poste client 4 dans un mode préféré de réalisation.

Dans un premier temps, l'identifiant de certificat ainsi que le nom de session sont adressés à la personne en charge d'installer le certificat 10 sur le poste client 4. Il est rappelé qu'avantageusement le poste client 4 reçoit les moyens logiciels également nécessaires aux fonctionnalités du dispositif d'interface de proximité. Une seule implantation matérielle du certificat 10 sera alors effective à la fois sur le poste client 4 dans ses fonctions générales et pour le dispositif d'interface de proximité 6.

L'installateur, ainsi en connaissance de l'identifiant de certificat et du nom de session, se connecte au niveau du poste client 4 au service de l'organisme de certification 9 par le biais du réseau Internet. Ce dernier demande à l'installateur de saisir l'identifiant de certificat. L'installateur effectue cette saisie et l'identifiant de certificat est retourné à l'organisme de certification 9 qui va vérifier dans la table de correspondance à quel nom de session est relié cet identifiant. L'organisme de certification 9 va alors adresser une page WEB au poste client 4 lui permettant d'installer le certificat incluant le nom de session correct dans le champ « nom d'utilisateur » du certificat 10.

La figure 5 montre les interactions existantes entre l'installateur, le poste client 4 et l'organisme de certification 9.

Une fois que l'installation du certificat 10 est opérée avec succès, le service de l'organisme de certification 9 n'est plus utilisé par le client.

Tel qu'indiqué précédemment, le dispositif d'interface de proximité 6 est avantageusement installé sur le poste client 4 et tourne en parallèle avec l'application client.

Le dispositif 6 authentifie le client lors de son entrée dans la session en autorisant la négociation du nom de session uniquement pour le nom de session installé sur le poste client 4, notamment selon la procédure de certificat 10 précitée.

Par ailleurs, le dispositif d'interface de proximité 6 crypte les données qui sont échangées avec le serveur 3 par l'intermédiaire du dispositif de passerelle 5.

Ainsi, le dispositif d'interface de proximité 6 sous forme logicielle agit comme un client TCP/IP pour le dispositif de passerelle 5 et comme un serveur local TCP/IP pour accepter ou refuser la connexion d'un client.

L'application client TN 3270 4 entre en connexion avec le dispositif d'interface de proximité 6 et lui-même se connecte au dispositif de passerelle 5.

Grâce à l'invention, le programme applicatif TN 3270 exécuté sur le poste client 4 peut rester le programme standard initial utilisé par le client jusqu'alors.

On décrit ci-après les étapes d'établissement de la communication pour un client vers le serveur 3, jusqu'à ce que ces deux entités soient prêtes à échanger des données.

Dans un premier temps, le poste client se connecte au dispositif d'interface de proximité 6.

Le dispositif d'interface de proximité 6 accepte la connexion du client et se connecte au dispositif de passerelle 5.

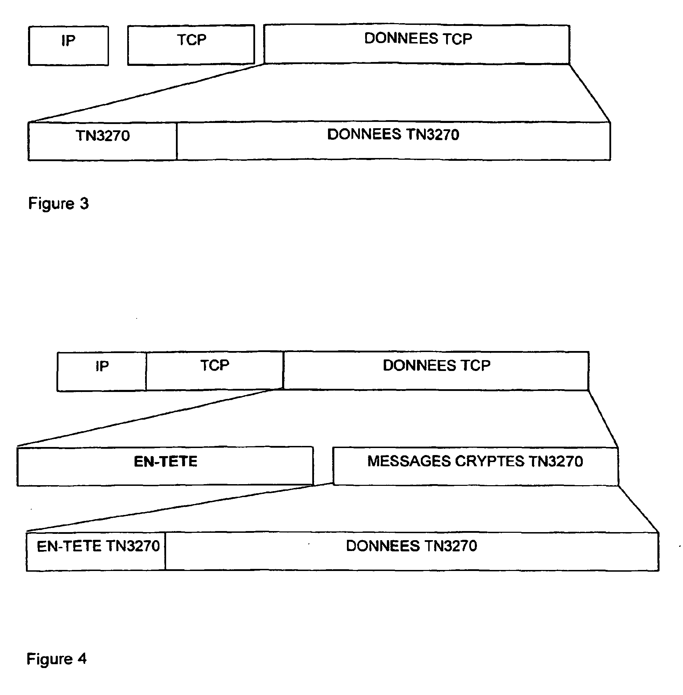

Lorsque le dispositif de passerelle 5 accepte la connexion du dispositif d'interface de proximité 6, il commence un processus interne de sécurité qui dépend de l'implémentation effectuée lors de l'installation. A titre d'exemple préféré, il est possible à cet instant de présenter le certificat 10 au serveur 3 pour vérifier sa validité. Ce message de présentation de certificat a avantageusement le format spécifique décrit plus loin en relation avec la figure 4. Si le certificat 10 n'est pas valable, le dispositif de passerelle 5 rejette la connexion et déconnecte immédiatement le dispositif d'interface de proximité 6.

L'utilisation à ce niveau du certificat 10 comme une clé numérique est très avantageuse car le dispositif de passerelle 5 peut utiliser plusieurs critères pour la vérification de l'autorisation de connexion, à savoir :
- l'autorité qui a délivré le certificat (organisme de certification 9) doit être valable (pour éviter à des personnes mal intentionnées de créer un faux certificat contenant le bon nom de session mais non signé par la bonne autorité de certification),
- la date de validité du certificat 10 ne doit pas être expirée,
- le certificat 10 ne doit pas être révoqué (si le serveur 3 gère une liste noire des certificats révoqués, même si l'utilisateur a un nom de session valable, il ne pourra se connecter),

Un message d'état de certificat (indiquant si le certificat présenté est valable) est retourné au dispositif d'interface de proximité 6 avantageusement avec le format de message décrit plus loin en relation avec la figure 4.

Si le dispositif de passerelle 5 a validé le certificat 10, il se connecte au serveur 3 tout comme le fait un poste client 4 classique selon l'état de la technique.

Si le serveur 3 accepte cette connexion, il démarre une négociation de protocole en envoyant un flux de données au dispositif de passerelle 5.

Ce dernier crypte le flux de données et l'envoie au dispositif d'interface de proximité 6 (avantageusement sous forme d'un message du type « données cryptées » dont le format est décrit plus loin en relation avec la figure 4. Le dispositif de passerelle 5 et le dispositif de proximité 6 utilisent dès lors ce format) qui le décrypte et adresse les données au poste client 4 en utilisant la connexion établie préalablement.

A cet instant, le poste client 4 a reçu le message initial du serveur 3. Il peut y répondre.

Le dispositif d'interface de proximité 6 reçoit ce message de réponse et le crypte pour l'envoyer ensuite au dispositif de passerelle 5 qui le décrypte et l'envoie à son tour au serveur 3.

Le serveur 3 analyse cette réponse et demande au client des informations supplémentaires, à savoir le type de matériel qu'il veut utiliser ainsi que le nom de session.

Comme précédemment, cette requête complémentaire est transmise par le biais du dispositif de passerelle 5 puis du dispositif d'interface de proximité 6 avec une étape de cryptage et de décryptage. La demande du serveur 3 est enfin reçue par le poste client 4.

Le poste client 4 répond à ce message en envoyant à nouveau un message au dispositif d'interface de proximité 6 répondant à l'interrogation du serveur 3, en mentionnant le type de machine et le nom de session que le client a saisis.

Le dispositif d'interface de proximité 6 détecte que ce message de réponse contient la demande d'utilisation d'un nom de session de client spécifique. De ce fait, pour contrôle, on vérifie à cet instant que le nom de session spécifique configuré dans l'application client TN 3270 correspond avec celui présent dans un des certificats 10 installés sur le poste client 4.

Si le nom de session apparaît dans un certificat 10, le client est autorisé à poursuivre la communication et le dispositif d'interface de proximité accepte de passer à l'étape suivante.

Si le nom de session ne correspond à aucun certificat 10 valide, le dispositif d'interface de proximité 6 rejette la requête du client.

Il ferme également les connexions établies avec le poste client 4 et le dispositif de passerelle 5. De façon consécutive, le dispositif de passerelle 5 ferme la session TCP/IP établie pour ce client avec le serveur 3.

Au lieu d'abandonner l'ensemble de ce processus, le dispositif d'interface de proximité 6 peut aussi changer le nom de session non valable en un nom de session qu'il retire d'un certificat 10 valable et continuer la communication.

Lorsque cette vérification de nom de session et ses conséquences sont opérées, le dispositif d'interface de proximité 6 crypte le message de réponse du client en utilisant la clé publique du dispositif de passerelle 5 et l'envoie à celui-ci. Le dispositif de passerelle 5 décrypte le message avec sa clé privée et l'envoie à son tour au serveur 3.

Ces étapes d'utilisation de clé publique et de clé privée sont illustrées notamment en figure 5.

A cet instant, le serveur 3 réceptionne le nom de session qui doit être utilisé pour le client qui se connecte et peut y associer la bonne configuration de fonctionnement.

Les étapes suivantes de négociation, selon le protocole TN 3270, peuvent se poursuivre en utilisant la même méthode de transmission.

De façon préférée, à chaque communication, le dispositif d'interface de proximité 6 et le dispositif de passerelle 5 agissent comme des éléments de cryptage et de décryptage et comme des routeurs entre les clients et le serveur 3.

En ce qui concerne le format des transmissions entre le dispositif d'interface de proximité 6 et le dispositif de passerelle 5, la figure 3 montre un exemple général du format des messages selon l'état de la technique, en utilisant le protocole TN 3270 dans un réseau de communication TCP/IP.

La figure 4 montre quant à elle un format caractéristique de message mis en oeuvre selon l'invention. En effet, les données TCP présentes dans le message sont, selon cette caractéristique, décomposées en une entête et en une partie de message cryptée TN 3270.

L'entête en question dépend du type de message adressé et notamment de l'étape d'échange lors de l'initiation de la connexion au serveur telle que précédemment décrite.

En particulier, les données de sécurisation seront avantageusement transmises au niveau de cette entête. Ainsi, l'entête pourra se présenter selon le format défini ci-après successivement pour l'envoi du message de présentation du certificat 10 depuis le dispositif d'interface de proximité 6 vers le dispositif de passerelle 5, le message consécutif d'état de certificat adressé depuis le dispositif de passerelle 5 vers le dispositif d'interface de proximité 6, puis pour les messages du type comprenant des données cryptées.

| | Offset 1 | 1 | 2......5 | 6 | 7...... n |
|---|---|---|---|---|---|
| | Signature du message | Signature du message | Taille du message | Type de message | Données fonctions du type de sécurisation |
| Présentation de certificat | 0X00 | 0X00 | taille | 0X13 | certificat |
| Etat de certificat | 0X00 | 0X00 | taille | 0X13 | code de réponse |
| Données cryptées | 0X00 | 0X00 | taille | 0X02 | données cryptées TN 3270 |

L'utilisation de cette entête spécifique dans le format des messages transmis entre les dispositifs 5 et 6 assure la communication sécurisée tant durant la phase de négociation pour l'autorisation que durant la phase ultérieure de transmission de données.

### REFERENCES

- 1.: Partie serveur
- 2.: Partie client
- 3.: Serveur
- 4.: Poste client
- 5.: Dispositif de passerelle
- 6.: Dispositif d'interface de proximité
- 7.: Réseau
- 8.: Client
- 9.: Organisme de certification
- 10.: Certificat

## Revendications

1. Procédé de sécurisation des communications dans un système informatique comprenant une partie serveur (1) dotée d'au moins un serveur (3) et une partie client (2) pourvue d'au moins un poste client (4) par lequel un client (8) peut accéder au système en spécifiant un nom de session, comprenant les étapes suivantes
- création d'un dispositif de passerelle (5) dans la partie serveur (1), en communication avec le serveur (3),
- création, au voisinage physique de chaque poste client (4), d'un dispositif de proximité (6) en communication avec ledit poste client (4) et le dispositif de passerelle (5),
- communication entre le serveur (3) et le poste client (4) par l'intermédiaire des dispositifs d'interface de proximité (6) et de passerelle (5),
- cryptage de tout ou partie de la transmission entre le dispositif de passerelle (5) et le dispositif d'interface de proximité (6).

2. Procédé selon la revendication 1 **caractérisé par le fait**
- **qu**'on mémorise dans le poste client (4) et le dispositif d'interface de proximité (6) un certificat (10) d'autorisation associé à un unique nom de session de client,
- **qu**'on présente le certificat (10) au serveur (3) depuis le dispositif d'interface de proximité (6), par l'intermédiaire du dispositif de passerelle (5), pour vérification de l'autorisation de connexion du client (8).

3. Procédé selon la revendication 2 **caractérisé par le fait**
**que** le certificat (10) inclut le nom de session du client (8).

4. Procédé selon la revendication 3 **caractérisé par le fait**
**qu**'on mémorise le certificat (10) dans le poste client (4) et le dispositif d'interface de proximité (6) par :
- fourniture à un installateur d'un identifiant de certificat et d'un nom de session fourni par le serveur lors de la création de la session sur le poste client (4),
- installation du certificat (10) sur le poste client (4)par téléchargement de l'organisme de certification (9) sur requête de l'installateur conditionnée à la présentation de l'identifiant de certificat et en y intégrant le nom de session du client par saisie de l'installateur.

5. Procédé selon l'une quelconque des revendications 1 à 4 **caractérisé par le fait**
**que** le cryptage des données entre le dispositif de passerelle (5) et le dispositif d'interface de proximité (6) s'effectue par utilisation de paires de clés publiques et privées.

6. Procédé selon l'une quelconque des revendications 1 à 5 **caractérisé par** l**e fait**
**qu**'on utilise un dispositif d'interface de proximité (6) sous forme d'extension logicielle implémentée dans le poste client (4).

7. Procédé selon la revendication 3 ou la revendication 4 **caractérisé par le fait**
- **que** le client (8) saisit son nom de session au niveau du poste client (4) lors de la configuration initiale de l'application du poste client (4),
- **qu**'on vérifie l'identité du nom de session saisie et de celui inclus dans le certificat (10)
pour vérifier l'autorisation du client (8).

8. Procédé selon l'une quelconque des revendications 1 à 7 **caractérisé par le fait**
**qu**'on utilise le protocole de communication Telnet 3270.

9. Procédé selon l'une quelconque des revendications 1 à 8 **caractérisé par le fait**
**que** les communications dans le système s'effectuent par un réseau au standard TCP/IP.

10. Système informatique à communications sécurisées comprenant une partie serveur (1) dotée d'au moins un serveur (3) et une partie client (2) pourvue d'au moins un poste client (4) par lequel un client (8) peut accéder au système en saisissant un nom de session, apte à mettre en oeuvre le procédé selon l'une quelconque des revendications 1 à 9,
comportant :
- un dispositif de passerelle (5) dans la partie serveur (1), en communication avec le serveur (3),
- un dispositif d'interface de proximité (6) au voisinage physique de chaque poste client (4), en communication avec ledit poste client (4) et le dispositif de passerelle (5),
- des moyens de cryptage pour les transmissions entre le dispositif de passerelle (5) et le dispositif d'interface de proximité (6).

11. Système selon la revendication 10 **caractérisé par le fait**
**que** les messages de transmission entre le dispositif de passerelle (5) et le dispositif d'interface de proximité (6) comprennent un entête intégrant des données de sécurisation.

## Claims

1. Method for securitising communications in a computer system comprising a server part (1) equipped with at least one server (3) and a client part (2) provided with at least one client station (4) through which a client (8) can access the system by specifying a session name, comprising the following steps
- creation of a gateway (5) in the server part (1), in communication with the server (3),
- creation - in the physical vicinity of each client station (4) - of a proximity device (6) in communication with said client station (4) and the gateway (5),
- communication between the server (3) and the client station (4) through the intermediary of the proximity interface device (6) and the gateway (5),
- encryption of all or part of the transmission between the gateway (5) and the proximity interface device (6).

2. Method according to claim 1, **characterised in that**
- an authorisation authenticator (10) associated with a single client session name is stored in the client station (4) and the proximity interface device (6),
- the authenticator (10) is submitted to the server (3) from the proximity interface device (6) through the intermediary of the gateway (5) for verification of the connection authorisation of the client (8).

3. Method according to claim 2, **characterised in that** the authenticator (10) includes the session name of the client (8).

4. Method according to claim 3, **characterised in that** the authenticator (10) is stored in the client station (4) and the proximity interface device (6) by
- supplying an installer with an authenticator identifier and a session name supplied by the server at the time of creation of the session on the client station (4),
- installing the authenticator (10) on the client station (4) by downloading by the authentication organisation (9) at the request of the installer conditional on the submission of the authenticator identifier and incorporation therein of the session name of the client which is entered by the installer.

5. Method according to any one of claims 1 to 4, **characterised in that** the encryption of the data between the gateway (5) and the proximity interface device (6) is effected by using pairs of public and private keys.

6. Method according to any one of claims 1 to 5, **characterised in that** use is made of a proximity interface device (6) in the form of an extension to the software implemented in the client station (4).

7. Method according to claim 3 or claim 4, **characterised in that**
- the client (8) enters his session name at the client station (4) at the time of initial configuration of the application of the client station (4),
- the entered session name and the session name included in the authenticator (10) are checked to ensure that they are the same
to verify the authorisation of the client (8).

8. Method according to any one of claims 1 to 7, **characterised in that** use is made of the communication protocol Telnet 3270.

9. Method according to any one of claims 1 to 8, **characterised in that** the communications in the system are effected through a network to standard TCP/IP.

10. Computer system with securitised communications comprising a server part (1) equipped with at least one server (3) and a client part (2) provided with at least one client station (4) through which a client (8) can access the system by entering a session name, suitable for implementing the method according to any one of claims 1 to 9, comprising
- a gateway (5) in the server part (1), in communication with the server (3),
- a proximity interface device (6) in the physical vicinity of each client station (4), in communication with said client station (4) and the gateway (5),
- means of encryption for the transmissions between the gateway (5) and the proximity interface device (6).

11. System according to claim 10, **characterised in that** the messages for transmission between the gateway (5) and the proximity interface device (6) comprise a header incorporating securitisation data.

## Patentansprüche

1. Verfahren zur Sicherung von Kommunikationen in einem Computersystem mit einem Server-Teil (1), ausgestattet mit mindestens einem Server (3), und einem Client-Teil (2), ausgestattet mit mindestens einer Client-Stelle (4), durch welche sich ein Client (8) durch Spezifikation eines Sitzungsnamens Zugang zum System verschaffen kann, mit den folgenden Schritten:
- Erstellen eines Gateways (5) im Server-Teil (1) in Kommunikation mit dem Server (3),
- Erstellen einer Umgebungsschnittstelle (6) in der physischen Nachbarschaft jeder Client-Stelle (4) in Kommunikation mit besagter Client-Stelle (4) und dem Gateway (5),
- Kommunizieren zwischen dem Server (3) und der Client-Stelle (4) mittels Umgebungsschnittstelle (6) und Gateway (5),
- Verschlüsseln der ganzen oder von Teilen der Übertragung zwischen Gateway (5) und Umgebungsschnittstelle (6).

2. Verfahren nach Anspruch 1, **dadurch gekennzeichnet, dass**
- in der Clientstelle (4) und der Umgebungsschnittstelle (6) ein einem einzigen Client-Sitzungsnamen zugeordnetes Berechtigungszertifikat (10) gespeichert wird, und
- das Zertifikat (10) dem Server (3) mittels Gateway (5) über die Umgebungsschnittstelle (6) zur Verifizierung der Verbindungsautorisierung des Clients (8) vorgelegt wird.

3. Verfahren nach Anspruch 2, **dadurch gekennzeichnet, dass** das Zertifikat (10) den Sitzungsnamen des Clients (8) umfasst.

4. Verfahren nach Anspruch 3, **dadurch gekennzeichnet, dass** das Zertifikat (10) in der Client-Stelle (4) und der Umgebungsschnittstelle (6) gespeichert wird durch
- Bereitstellen einer Zertifikatserkennung und eines Sitzungsnamens an einen Installateur durch den Server während der auf der Clientstelle (4) erfolgenden Sitzungserstellung,
- Installieren des Zertifikats (10) auf der Clientstelle (4) durch Herunterladen von der Bestätigungsstelle (9) durch Abfrage durch den Installateur und zwar bedingt durch das Vorzeigen der Zertifikatserkennung und den darin integrierten, durch den Installateur erfassten Sitzungsnamen des Clients.

5. Verfahren nach einem der Ansprüche 1 bis 4, **dadurch gekennzeichnet, dass** die Verschlüsselung der Daten zwischen dem Gateway (5) und der Umgebungsschnittstelle (6) durch Benutzung von öffentlichen und privaten Schlüsselpaaren erfolgt.

6. Verfahren nach einem der Ansprüche 1 bis 5, **dadurch gekennzeichnet, dass** eine Umgebungsschnittstelle (6) in Form einer implementierten Softwareerweiterung in der Client-Stelle (4) verwendet wird.

7. Verfahren nach Anspruch 3 oder 4, **dadurch** gezeichnet, dass
- der Client (8) seinen Sitzungsnamen von der Client-Stelle (4) während der Anwendungshauptkonfiguration der Client-Stelle (4) erhält,
- die Identität des eingeholten und des im Zertifikat (10) enthaltenen Sitzungsnamens geprüft wird,
um die Berechtigung des Clients (8) zu verifizieren.

8. Verfahren nach einem der Ansprüche 1 bis 7, **dadurch gekennzeichnet, dass** das Kommunikationsprotokoll Telnet 3270 verwendet wird.

9. Verfahren nach einem der Ansprüche 1 bis 8, **dadurch gekennzeichnet, dass** die Kommunikation im System über ein Netzwerk nach Standard TCP/IP erfolgt.

10. Computersystem gesicherter Kommunikation, mit einem Server-Teil (1), ausgestattet mit mindestens einem Server (3), und einem Client-Teil (2), ausgestattet mit mindestens einer Client-Stelle (4), durch welche ein Client (8) Zugang zum System bekommen kann, indem er einen für die Ingangsetzung des Verfahrens nach einem der Ansprüche 1 bis 9 geeigneten Sitzungsnamen anlegt, mit
- einem Gateway (5) im Server-Teil (1) in Kommunikation mit dem Server (3),
- einer Umgebungsschnittstelle (6) in der physischen Umgebung jeder Client-Stelle (4) in Kommunikation mit besagter Client-Stelle (4) und dem Gateway (5),
- einer Verschlüsselungseinrichtung für die Übertragungen zwischen dem Gateway (5) und der Umgebungsschnittstelle (6).

11. System nach Anspruch 10 **dadurch gekennzeichnet, dass** die übertragenen Nachrichten zwischen dem Gateway (5) und der Umgebungsschnittstelle (6) einen die Sicherheitsdaten aufnehmenden Header umfassen.
